(19) Europäisches Patentamt
European Patent Office
Office européen des brevets

(11) **EP 3 495 781 B1**

(12) **EUROPÄISCHE PATENTSCHRIFT**

(45) Veröffentlichungstag und Bekanntmachung des Hinweises auf die Patenterteilung:
**11.11.2020 Patentblatt 2020/46**

(51) Int Cl.:
***G01D 5/20*** *(2006.01)*

(21) Anmeldenummer: **18193629.5**

(22) Anmeldetag: **11.09.2018**

(54) **INDUKTIVE POSITIONSMESSEINRICHTUNG**

INDUCTIVE POSITION MEASUREMENT DEVICE

DISPOSITIF INDUCTIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2017 DE 102017222063**

(43) Veröffentlichungstag der Anmeldung:
**12.06.2019 Patentblatt 2019/24**

(73) Patentinhaber: **Dr. Johannes Heidenhain GmbH 83301 Traunreut (DE)**

(72) Erfinder:
• **TIEMANN, Marc Oliver**
**83329 Waging am See (DE)**
• **FRANK, Alexander**
**83377 Vachendorf (DE)**
• **HEUMANN, Martin**
**83278 Traunstein (DE)**
• **AUER, Daniel**
**83278 Traunstein (DE)**
• **SELL, Oliver**
**83301 Traunreut (DE)**

(56) Entgegenhaltungen:
**WO-A2-2007/137693 DE-A1-102012 223 037**
**DE-B- 1 295 204 US-A1- 2006 001 518**
**US-A1- 2015 109 001**

EP 3 495 781 B1

**Beschreibung**

## GEBIET DER TECHNIK

Die Erfindung betrifft eine induktive Positionsmesseinrichtung zur Bestimmung von Relativpositionen gemäß dem Anspruch 1.

Induktive Positionsmesseinrichtungen werden beispielsweise als Winkelmessgeräte zur Bestimmung der Winkelstellung zweier relativ zueinander drehbarer Maschinenteile verwendet. Bei induktiven Positionsmesseinrichtungen sind häufig Erregerspulen und Empfängerspulen etwa in Form von Leiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Teilungselement, auf dem in periodischen Abständen alternierend elektrisch leitfähige und nichtleitfähige Flächen oder Stege und Lücken als Teilungsstruktur aufgebracht sind, und welches mit dem Rotor des Winkelmessgeräts drehfest verbunden ist. Wenn an den Erregerspulen ein zeitlich wechselnder elektrischer Erregerstrom angelegt wird, werden in den Empfängerspulen während der Relativdrehung zwischen Rotor und Stator von der Winkelstellung abhängige Signale erzeugt. Diese Signale werden dann in einer Auswerteelektronik weiterverarbeitet.

Häufig werden derartige induktive Positionsmesseinrichtungen als Messgeräte für elektrische Antriebe, zur Bestimmung der Relativbewegung beziehungsweise der Relativlage von entsprechenden Maschinenteilen eingesetzt. In diesem Fall werden die erzeugten Positionswerte einer Folgeelektronik zur Ansteuerung der Antriebe über eine entsprechende Schnittstellenanordnung zugeführt.

## STAND DER TECHNIK

In der DE 10 2012 223 037 A1 der Anmelderin wird eine Winkelmesseinrichtung beschrieben, bei der in Verbindung mit der Messung der Winkelstellung eine axiale Verschiebung des Teilungselements bestimmbar ist.

## ZUSAMMENFASSUNG DER ERFINDUNG

Der Erfindung liegt die Aufgabe zugrunde, eine induktive Positionsmesseinrichtung zu schaffen, durch die auf einfache Weise eine Bestimmung einer relativen Winkelstellung sowie einer Position in einer ersten Richtung ermöglicht ist, die sich entlang der Empfängerspuren erstreckt.

Diese Aufgabe wird erfindungsgemäß durch die Merkmale des Anspruches 1 gelöst.

Die induktive Positionsmesseinrichtung weist demnach ein Abtastelement und ein Teilungselement auf, wobei das Teilungselement relativ zum Abtastelement um eine Achse drehbar angeordnet ist beziehungsweise rotatorisch bewegbar ist. Das Abtastelement weist eine Erregerleitung oder mehrere Erregerleitungen auf. Weiterhin weist das Abtastelement eine erste Empfängerspur auf. Diese umfasst zumindest eine Empfängerleitung, welche gemäß einem ersten periodischen Muster mit einer ersten Periode entlang einer ersten Richtung verläuft. Insbesondere kann die erste Empfängerspur mehrere Empfängerleitungen aufweisen, die gemäß einem ersten periodischen Muster mit einer ersten Periode entlang einer ersten Richtung verlaufen. Außerdem weist das Abtastelement eine zweite Empfängerspur auf, die zumindest eine Empfängerleitung umfasst. Das Teilungselement umfasst eine Teilungsspur, die sich bezogen auf die Achse in Umfangsrichtung erstreckt und tangential entlang der Umfangsrichtung eine Teilungsperiode aufweist. Die Positionsmesseinrichtung ist so konfiguriert, dass ein durch die Teilungsspur von der zumindest einen Erregerleitung erzeugtes elektromagnetisches Feld modulierbar ist, so dass durch die Empfängerleitung der ersten Empfängerspur eine Winkelstellung des Teilungselements relativ zum Abtastelement detektierbar beziehungsweise messbar ist. Zudem ist durch die Empfängerleitung der zweiten Empfängerspur eine Position des Teilungselements in der ersten Richtung relativ zum Abtastelement detektierbar beziehungsweise messbar.

Die zweite Empfängerspur umfasst zumindest eine Empfängerleitung, welche mit Vorteil gemäß einem zweiten periodischen Muster mit einer zweiten Periode entlang der ersten Richtung verläuft. Insbesondere kann die zweite Empfängerspur mehrere Empfängerleitungen aufweisen, die gemäß einem zweiten periodischen Muster mit einer zweiten Periode entlang der ersten Richtung verlaufen.

Eine Periode ist also eine geometrische Länge.

Die erste Empfängerspur weist zumindest eine Empfängerleitung auf, welche mehrere in der ersten Richtung aneinander gereihte Windungen aufweist. Ferner weist das Abtastelement eine zweite Empfängerspur auf, die zumindest eine Empfängerleitung umfasst, welche zumindest eine Windung aufweist.

Durch die Empfängerleitung der ersten Empfängerspur ist also eine Drehbewegung beziehungsweise Winkelstellung um die Achse detektierbar, die jedoch beispielsweise durch einen Exzentrizitätsfehler des Teilungselements oder durch eine ungenaue Platzierung des Teilungselements in der ersten Richtung relativ zum Abtastelement fehlerbehaftet sein kann. Durch die Empfängerleitung der zweiten Empfängerspur ist eine translatorische oder eine lineare Stellung in der oben definierten ersten Richtung detektierbar. Damit wird die Möglichkeit eröffnet in Kenntnis der Messung durch die zweite Empfängerspur die durch die Empfängerleitung der ersten Empfängerspur ermittelte Winkelstellung zu korrigieren, so dass letztlich die Systemgenauigkeit im Hinblick auf die Messung der Winkelstellung erhöht wird.

Üblicherweise sind das Abtastelement und das Teilungselement einander gegenüber liegend angeordnet und durch einen Luftspalt, der sich in einer zweiten Richtung erstreckt, voneinander beabstandet. Die zweite Richtung ist insbesondere orthogonal zur ersten Richtung orientiert und insbesondere auch orthogonal zur Achse um die das Teilungselement relativ zum Abtastelement drehbar angeordnet ist.

Mit Vorteil weist die erste Empfängerspur oder die zweite Empfängerspur oder beide Empfängerspuren jeweils zumindest zwei Empfängerleitungen auf, die vorzugsweise mit einem Phasenversatz (z.B. mit einem Phasenversatz von 90°) zueinander angeordnet sind.

In vorteilhafter Ausgestaltung der Erfindung entspricht die Länge der ersten Periode ungefähr der Länge der Teilungsperiode. Insbesondere gilt mit Vorteil:

1,5 > [erste Periode : Teilungsperiode] > 0,75 oder
1,25 > [erste Periode : Teilungsperiode] > 0,85 oder
1,15 > [erste Periode : Teilungsperiode] > 0,9.

Mit Vorteil weist die erste Empfängerspur zumindest eine Empfängerleitung auf, die sich entlang der ersten Richtung über eine erste Länge erstreckt, wobei die erste Länge mindestens drei-mal größer (beziehungsweise drei-mal so groß ist als die erste Periode (beziehungsweise drei-mal so groß ist wie die erste Periode). Insbesondere kann die erste Länge mindestens vier- oder sechs-mal größer sein als die erste Periode.

In weiterer Ausgestaltung der Erfindung weist die Empfängerleitung der ersten Empfängerspur zumindest zwei Windungen auf.

Insbesondere kann die Empfängerleitung der ersten Empfängerspur mehr Windungen aufweisen als die Empfängerleitung der zweiten Empfängerspur.

In vorteilhafter Ausgestaltung der Erfindung ist die Empfängerleitung der zweiten Empfängerspur gemäß einem zweiten periodischen Muster mit einer zweiten Periode angeordnet, wobei die zweite Periode größer beziehungsweise länger ist als die erste Periode. Beispielsweise kann das erste und oder das zweite periodische Muster einen sinusförmigen Verlauf aufweisen. Mit Vorteil ist die zweite Periode mindestens 2-mal, vorteilhafterweise mindestens 4-mal größer oder 6-mal größer als die erste Periode.

In weiterer Ausgestaltung der Erfindung ist die Empfängerleitung der zweiten Empfängerspur gemäß einem zweiten periodischen Muster mit einer zweiten Periode angeordnet und die Teilungsperiode der zweiten Periode ist größer als die Periode der Teilungsspur.

Mit Vorteil ist bezogen auf die Achse die erste Empfängerspur mit radialem Versatz relativ zur zweiten Empfängerspur angeordnet. Insbesondere ist die erste Empfängerspur in kleinerem radialem Abstand zur Achse angeordnet als die zweite Empfängerspur.

Die Teilungsspur ist insbesondere entlang einer Mantelfläche eines zylindrischen Körpers angeordnet und weist eine Ausdehnung in der Umfangsrichtung auf. Demnach weist das Teilungselement eine gekrümmte Mantelfläche auf, auf der die Teilungsspur angeordnet ist.

Mit Vorteil kann die erste Empfängerspur oder die zweite Empfängerspur oder beide Empfängerspuren auf einer gekrümmten Ebene angeordnet sein, wobei sich der Krümmungsradius der gekrümmten Ebene vom Krümmungsradius der gekrümmte Mantelfläche, auf der die Teilungsspur angeordnet ist, unterscheidet. Insbesondere kann die erste Empfängerspur oder die zweite Empfängerspur oder können beide Empfängerspuren auf einer planen Ebene angeordnet sein.

Vorteilhaft weist die Teilungsspur entlang der ersten Richtung alternierend angeordnete Stege und Lücken auf. Alternativ kann die Teilungsspur aus einer Teilungsstruktur, die entlang der ersten Richtung alternierend angeordnete, elektrisch leitfähige und nichtleitfähige Bereiche aufweist, gebildet werden. Die Teilungsstruktur kann auch andere ferromagnetische Geometrien umfassen. Eine Teilungsperiode ist eine geometrische Länge, die durch die Teilungsstruktur bestimmt ist. Innerhalb einer Teilungsperiode befinden sich beispielsweise jeweils genau eine leitende und eine nicht-leitenden Fläche beziehungsweise genau ein Steg und eine Lücke. Beim Überstreichen einer Teilungsperiode kann durch das Abtastelement eine Signalperiode erzeugt werden.

Mit Vorteil weist das Teilungselement eine kreisförmige Außenkontur mit einem Durchmesser auf. Die zweite Empfängerspur weist zudem zumindest eine Empfängerleitung auf, die sich entlang der ersten Richtung über eine bestimmte Länge erstreckt, wobei die Länge größer ist als der halbe Durchmesser. In vorteilhafter Weise ist die Länge mindestens 0,75-mal größer als der Durchmesser. Weiterhin kann die erste Empfängerspur zumindest eine Empfängerleitung aufweisen, die sich entlang der ersten Richtung über eine erste Länge erstreckt, wobei die erste Länge größer ist als der Durchmesser. Mit Vorteil ist die erste Länge größer als der 1,5-fache Durchmesser oder größer als der doppelte Durchmesser.

In weiterer Ausgestaltung der Erfindung weist das Teilungselement eine kreisförmige Außenkontur mit einem Durchmesser auf und die Empfängerleitung der zweiten Empfängerspur ist gemäß einem zweiten periodischen Muster mit einer zweiten Periode angeordnet. Dabei ist die zweite Periode größer als der Durchmesser.

Die Positionsmesseinrichtung ermöglicht insbesondere eine Erfassung der relativen Position des Teilungselements in der ersten lateralen Richtung unabhängig von der Winkelstellung des Teilungselements.

In vorteilhafter Ausgestaltung der Erfindung ist durch die Empfängerleitung der ersten Empfängerspur ein erstes Signal mit einem ersten Amplitudenbetrag erzeugbar und durch die Empfängerleitung der zweiten Empfängerspur ein zweites Signal mit einem zweiten Amplitudenbetrag. Dabei ist die Positionsmesseinrichtung so konfiguriert, dass basierend auf dem ersten Amplitudenbetrag und dem zweiten Amplitudenbetrag ein Abstand einer zweiten Richtung zwischen dem Abtastelement und dem Teilungselement bestimmbar ist. Beispielsweise kann ein Quotient aus dem ersten Amplitudenbetrag und dem zweiten Amplitudenbetrag gebildet werden, welcher die Information über den Abstand beinhaltet. Alternativ kann zu diesem Zweck auch eine Differenz aus dem ersten Amplitudenbetrag und dem zweiten Amplitudenbetrag gebildet werden.

Die Erfindung umfasst auch eine Positionsmesseinrichtung, deren Abtastelement mehrere in axialer Richtung versetzt angeordnete erste Empfängerspuren aufweist, beispielsweise zur Detektion von absoluten Winkelstellungen nach dem Nonius-Prinzip, wobei dann auch das Teilungselement mehrere in axialer Richtung versetzt angeordnete Teilungsspuren aufweist. Eine derartige Positionsmesseinrichtung kann auch mehrere in axialer Richtung versetzt angeordnete zweite Empfängerspuren aufweisen. Durch geeignete Verarbeitung der detektierten Signale beziehungsweise deren Amplitudenbeträge kann bei dieser Anordnung zusätzlich auch die Verkippung der Achse relativ zum Abtastelement bestimmt werden.

Vorteilhafte Ausbildungen der Erfindung entnimmt man den abhängigen Ansprüchen.

Weitere Einzelheiten und Vorteile der erfindungsgemäßen induktiven Positionsmesseinrichtung ergeben sich aus der nachfolgenden Beschreibung eines Ausführungsbeispiels anhand der beiliegenden Figuren.

**KURZE BESCHREIBUNG DER ZEICHNUNGEN**

| | |
|---|---|
| Figur 1 | eine perspektivische Ansicht einer Positionsmesseinrichtung zur Bestimmung einer relativen Winkelstellung, |
| Figur 2 | eine Draufsicht auf ein Teilungselement, |
| Figur 3 | eine perspektivische Ansicht auf Teile eines Abtastelements sowie auf das Teilungselement, |
| Figur 4 | eine Draufsicht auf eine erste Empfängerspur und eine Erregerleitung des Abtastelements, |
| Figur 5 | eine Draufsicht auf eine zweite Empfängerspur und eine Erregerleitung des Abtastelements, |
| Figur 6 | ein Diagramm zur Bestimmung des Abstandes zwischen Abtastelement und Teilungselement, |
| Figur 7 | eine Draufsicht auf das Teilungselement und das Abtastelement. |

**BESCHREIBUNG DER AUSFÜHRUNGSFORMEN**

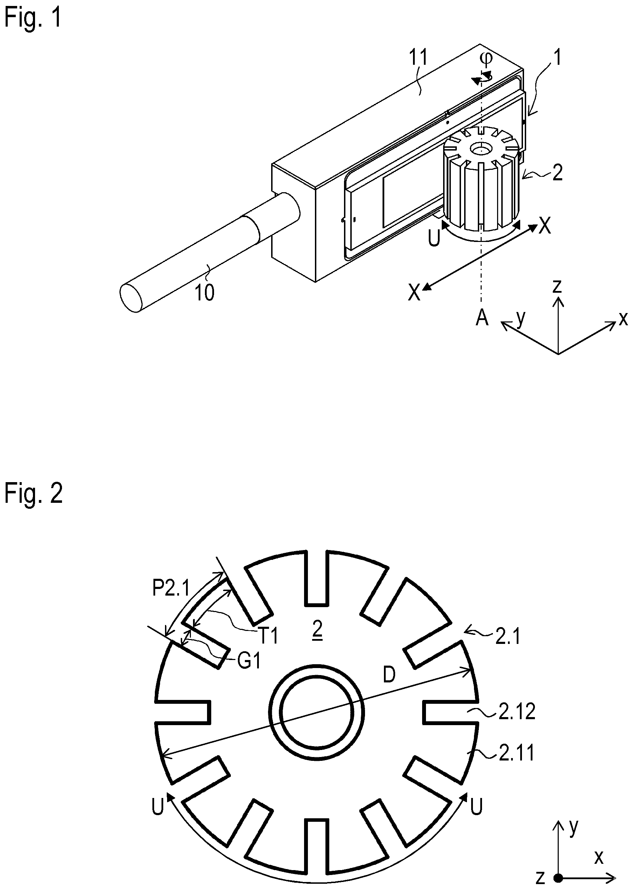

Die Erfindung wird anhand einer Positionsmesseinrichtung beschrieben, welche zur Erfassung einer Winkelstellung φ zwischen einem Abtastelement 1 und einem um eine Achse A drehbaren Teilungselement 2 beziehungsweise einer Skala bestimmt ist (Figur 1).

Zur Erreichung des betriebsgemäßen Zustands wird das Teilungselement 2 entlang einer ersten Richtung X relativ zum Abtastelement 1 positioniert, so dass sich das Abtastelement 1 und das Teilungselement 2 mit einem Luftspalt, der sich in einer zweiten Richtung Y erstreckt, einander gegenüber liegen.

Das Teilungselement 2 ist als ein im Wesentlichen zylindrischer Körper mit einer Achse A ausgestaltet, an dessen Mantelseite sich eine Teilungsspur 2.1 befindet (siehe auch die Figur 2). Die Teilungsspur 2.1 erstreckt sich in Umfangsrichtung U und weist entlang der Umfangsrichtung U eine Teilungsperiode P2.1 auf. Im vorgestellten Ausführungsbeispiel umfasst die Teilungsspur 2.1 Stege 2.11 und dazwischen liegende Lücken 2.12, wobei die erste Teilungsspur 2.1 je zwölf derartiger Stege 2.11 und Lücken 2.12 (n = 12) aufweist. Die Teilungsspur 2.1 besteht demnach aus einer periodischen Abfolge von alternierend angeordneten Stegen 2.11 und Lücken 2.12. Die Teilungsperiode P2.1 der Teilungsspur 2.1 ergibt sich aus der Summe der Länge T1 eines der Stege 2.11 und der Länge G1 einer der Lücken 2.12, wobei sich die Längen T1, G1 in Umfangsrichtung U erstrecken. Die Längen T1 sind für alle Stege 2.11 gleich groß wie auch jeweils die Längen G1 der Lücken 2.12. Im vorgestellten Ausführungsbeispiel beträgt der Durchmesser D des Teilungselements 2 neun Millimeter. Demnach kann die Teilungsperiode P2.1 folgendermaßen ermittelt werden:

$$P2.1 = D \cdot \pi / n = 9 \text{ mm} \cdot \pi / 12 = 2{,}36 \text{ mm}$$

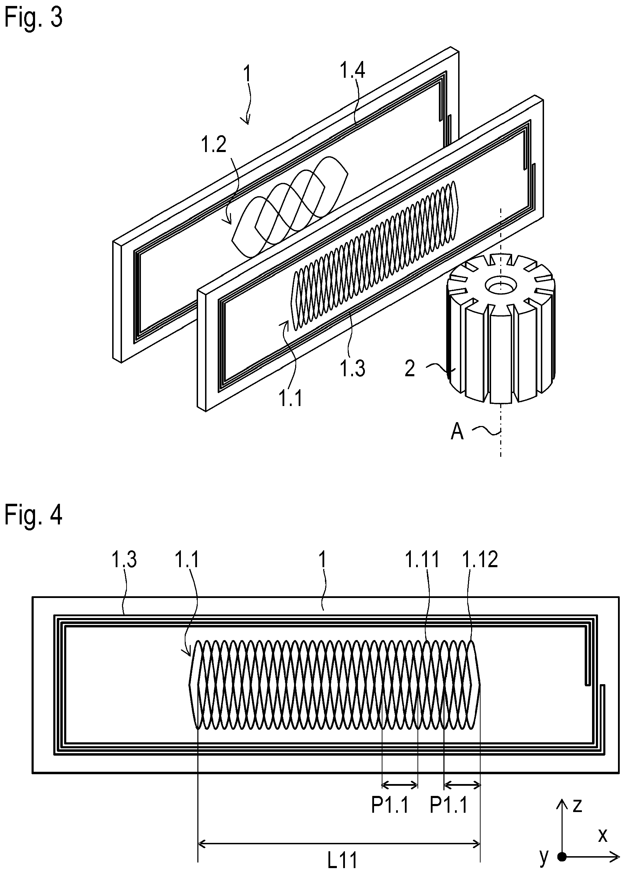

In der Figur 3 sind schematisch Teile der Positionsmesseinrichtung dargestellt. Das Abtastelement 1 umfasst eine ebene mehrschichtige Leiterplatte, auf welcher eine erste Empfängerspur 1.1 und eine Erregerleitung 1.3 sowie eine zweite Empfängerspur 1.2 und eine Erregerleitung 1.4 auf unterschiedlichen Ebenen angeordnet sind. Zur Veranschaulichung sind die Ebenen in der Ansicht der Figur 3 separiert dargestellt. In der Realität sind die beiden Ebenen unmittelbar benachbart angeordnet. Die Positionsmesseinrichtung ist so konfiguriert, dass bezogen auf die Achse A die erste Empfängerspur 1.1 mit radialem Versatz relativ zur zweiten Empfängerspur 1.2 angeordnet ist. Demnach ist die erste Empfängerspur 1.1 näher an der Achse A gelegen als die zweite Empfängerspur 1.2.

Die Empfängerspuren 1.1, 1.2 umfassen jeweils zwei Empfängerleitungen 1.11, 1.12; 1.21, 1.22. Im vorgestellten Ausführungsbeispiel sind die Empfängerleitungen 1.11, 1.12; 1.21, 1.22 als Leiterbahnen ausgestaltet. Insbesondere verlaufen die Empfängerleitungen 1.11, 1.12; 1.21, 1.22 beziehungsweise Leiterbahnen auf unterschiedlichen Ebenen mit Durchkontaktierungen, so dass an Kreuzungspunkten unerwünschte Kurzschlüsse vermieden werden. Im gezeigten Ausführungsbeispiel sind zumindest vier Lagen in dem Leiterplattenaufbau vorgesehen.

Die Empfängerleitungen 1.11, 1.12 der ersten Empfängerspur 1.1 weisen gemäß der Figur 4 jeweils eine Erstreckung L11 (im vorgestellten Ausführungsbeispiel beträgt L11 = 19,2 mm) entlang der Richtung X auf und sind gemäß einem periodischen Muster, im vorgestellten Ausführungsbeispiel gemäß einem sinusartigen Muster angeordnet. Die ersten Empfängerleitungen 1.11, 1.12 weisen hier jeweils acht Windungen auf, so dass diese jeweils eine erste Periode P1.1 von 2,4 mm aufweisen. Somit entspricht die erste Periode P1.1 ungefähr der Teilungsperiode P2.1, so dass gilt:

(erste Periode P1.1) : (Teilungsperiode P2.1) = 2,4 mm : 2,36 mm = 1,017

Durch die ersten Empfängerleitungen 1.11, 1.12 kann im Grunde ein vergleichsweise hochauflösendes Inkrementalsignal bei einer Relativdrehung des Teilungselements 2 gegenüber der Abtastleiterplatte 1 erzeugt werden.

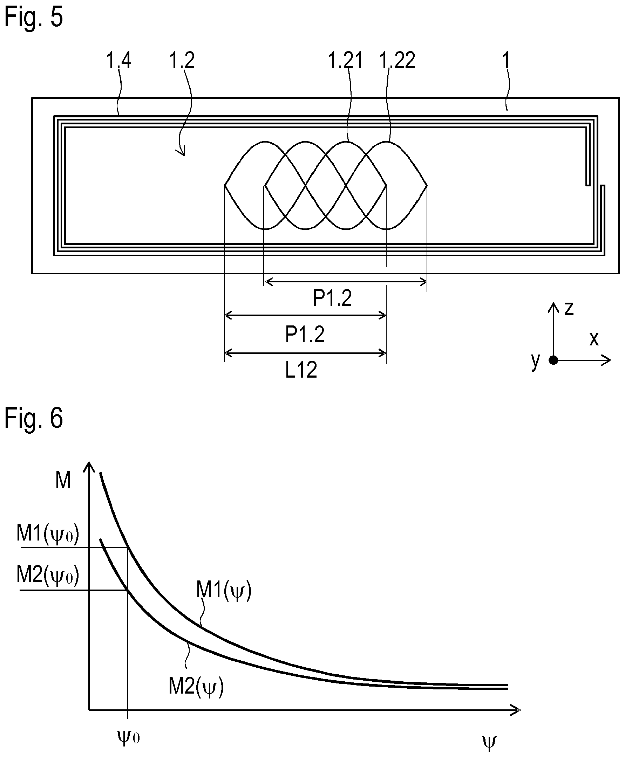

Die zweiten Empfängerleitungen 1.21, 1.22 der zweiten Empfängerspur 1.2 weisen dagegen nur jeweils eine Windung auf (Figur 5) und jeweils eine Erstreckung L12 (im vorgestellten Ausführungsbeispiel beträgt L12 = 11 mm) entlang der Richtung X auf, so dass diese jeweils eine Periode P1.2 von ebenfalls 11 mm aufweisen.

Zudem ist auf dem Abtastelement 1 eine elektronische Schaltung sowie ein Steckerelement angeordnet, welche in den Figuren nicht dargestellt sind. Das Abtastelement 1 ist in einem Gehäuse 11 (Figur 1) montiert. Über ein Kabel 10 ist das Abtastelement 1 mit einer Folgeelektronik verbindbar.

Wie aus den Figuren 3 bis 5 ersichtlich, ist sowohl um die erste als auch um die zweite Empfängerspur 1.1, 1.2 herum jeweils eine Erregerleitung 1.3, 1.4 angeordnet. Alternativ hierzu könnte auch nur eine Erregerleitung verwendet werden.

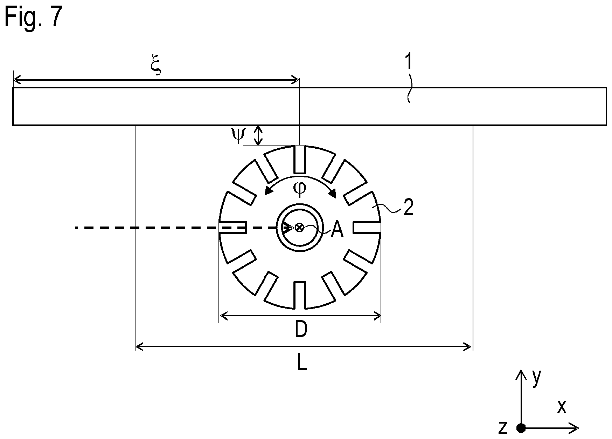

Häufig ist das Teilungselement 2 an einem Maschinenteil befestigt, wobei das Maschinenteil mit dem Teilungselement 2 vor dem Abtastelement 1, etwa durch einen Servoantrieb, platziert werden muss um die Positionsmesseinrichtung in eine betriebsgemäße Konfiguration zu bringen. Beispielsweise kann das Teilungselement 2, wie in der Figur 7 durch den gestrichelten Pfeil angedeutet, linear in X-Richtung in die entsprechende Arbeitsposition gebracht werden. Alternativ zur linearen Bewegung ist auch eine Einschwenk- oder Drehbewegung möglich, so dass sich die Achse A entlang einer gekrümmten Bahn bewegt. Danach liegt das Teilungselement 2 mit radialem Luftspalt beziehungsweise im Abstand $\psi$ (Figur 7) gegenüber dem Abtastelement 1, ohne dass sich Abtastelement 1 und Teilungselement 2 berühren. Üblicherweise dient das Teilungselement 2 als Rotor und ist an einem um die Achse A drehbaren Maschinenteil befestigt. Dagegen bildet dann das Abtastelement 1 den Stator der Positionsmesseinrichtung, so dass dieses an einem stehenden Maschinenteil fixiert wird. Bei einer Relativdrehung des Teilungselements 2 bezogen auf das Abtastelement 1 um die Achse A ist in den Empfängerleitungen 1.11, 1.12 der ersten Empfängerspur 1.1 ein von der jeweiligen Winkelstellung $\varphi$ abhängiges Signal durch Induktionseffekte erzeugbar und somit die Winkelstellung $\varphi$ des Teilungselements 2 relativ zum Abtastelement 1 detektierbar.

Voraussetzung für die Bildung von entsprechenden Signalen ist, dass die Erregerleitungen 1.3, 1.4 ein zeitlich wechselndes elektromagnetisches Erregerfeld im Bereich der Empfängerspuren 1.1, 1.2 beziehungsweise im Bereich der damit abgetasteten Teilungsspur 2.1 erzeugen. Im dargestellten Ausführungsbeispiel sind die Erregerleitungen 1.3, 1.4 als mehrere parallele, Stromdurchflossene Einzel-Leiterbahnen ausgebildet. Werden die Erregerleitungen 1.3, 1.4 bestromt, so bildet sich um die jeweilige Erregerleitung 1.3, 1.4 ein schlauch- bzw. zylinderförmig orientiertes elektromagnetisches Feld aus. Die Feldlinien des resultierenden elektromagnetischen Feldes verlaufen in Form konzentrischer Kreise um die Erregerleitungen 1.3, 1.4, wobei die Richtung der Feldlinien in bekannter Art und Weise von der Stromrichtung in den Erregerleitungen 1.3, 1.4 abhängt. Im Bereich der Stege 2.11 werden Wirbelströme induziert, so dass eine von der Winkelstellung $\varphi$ abhängige Modulation des Feldes erreicht wird. Entsprechend kann durch die Empfängerspur 1.1 die relative Winkelstellung $\varphi$ gemessen werden. Die Paare von Empfängerleitungen 1.11, 1.12 der ersten Empfängerspur 1.1 sind so angeordnet, dass diese jeweils um 90° phasenversetzte Signale liefern, so dass auch eine Bestimmung der Drehrichtung vorgenommen werden kann. Die Empfängerspur 1.1 zur Bestimmung der Winkelstellung $\varphi$ wird von einer eigenen Erregerleitung 1.3 umgeben. Die so ermittelte Winkelstellung $\varphi$ weist aber im Allgemeinen signifikante Fehler auf, die durch die Messung mit Hilfe der zweiten Empfängerspur 1.2 korrigiert beziehungsweise eliminiert werden.

Die relative Position $\xi$ in Richtung X zwischen dem Teilungselement 2 und dem Abtastelement 1 wird mit der zweiten Empfängerspur 1.2 detektiert. Die von den Empfängerleitungen 1.21, 1.22 erzeugten Signale hängen von der Position $\xi$ des Teilungselementes 1.2 relativ zum Abtastelement 1.1 in Richtung X ab.

Das zur Gewinnung der Signale für die X-Position $\xi$ durch die zweite Empfängerspur 1.2 erforderliche Erregerfeld wird von den Erregerleitungen 1.3, 1.4 erzeugt. Dadurch, dass die Empfängerleitungen 1.21, 1.22 der zweiten Empfängerspur 1.2 eine zweite Periode P1.2 aufweisen, die größer ist als die erste Periode P1.1, tritt praktisch keine Beeinflussung des von den Empfängerleitungen 1.21, 1.22 erzeugten Signals von der Winkelstellung $\varphi$ des Teilungselement 2.1 auf. Im vorgestellten Ausführungsbeispiel ist die zweite Periode P1.2 etwa 4,6 Mal größer beziehungsweise länger ist als die erste Periode P1.1.

Somit kann durch die Positionsmesseinrichtung eine relative laterale Position $\xi$ des Teilungselements 2 in der Richtung X, welche orthogonal zur Achse A orientiert ist, detektiert werden unter Verwendung genau derjenigen Erregerleitungen 1.3, 1.4, welche ein elektromagnetisches Feld erzeugen, mit deren Hilfe letztlich auch die eine Winkelstellung φ detektierbar ist.

Die elektronische Schaltung des Abtastelements 1, beispielsweise ein ASIC-Baustein, arbeitet nicht nur als Auswerteelement, sondern auch als Erregerkontrollelement, unter dessen Kontrolle der Erregerstrom, welcher dann durch die Erregerleitungen 1.3, 1.4 fließt, erzeugt wird. Somit werden beide Erregerleitungen 1.3, 1.4 durch ein und dasselbe Erregerkontrollelement bestromt. Auf spezielle Erregerleitungen für die Detektion der relativen Position ξ in X-Richtung kann also verzichtet werden.

Die so gewonnene Information über die genaue relative Position ξ des Teilungselements 2 in X-Richtung wird im Auswerteelement genutzt um den Wert für die Winkelstellung φ zu korrigieren, so dass dieser mit erhöhter Messgenauigkeit im Vergleich zu konventionellen Winkelmessgeräten erzeugbar ist.

Darüber hinaus kann durch die im vorgestellten Ausführungsbeispiel beschriebene Positionsmesseinrichtung auch die relative Position ψ des Teilungselements 2 in Bezug auf das Abtastelement 1 in der Richtung Y bestimmt werden, also die Größe des Luftspaltes. Zu diesem Zweck werden die Amplitudenbeträge M1, M2, z. B aus der Wurzel der Summe der quadrierten Signalamplituden $S1_0$, $S1_{90}$ erzeugt (M1 = $\sqrt{(S1_0^2 + S1_{90}^2)}$). Die Signalamplituden werden gewonnen indem die hochfrequenten, amplitudenmodulierten Eingangssignale phasengesteuert gleichgerichtet werden. In der Figur 6 ist ein Diagramm dargestellt, bei dem auf der Abszisse Abstand ψ des Teilungselements 2 in der zweiten Richtung Y aufgetragen ist und auf der Ordinate die Amplitude M. Die beiden Kurven stellen Verläufe von Amplitudenbeträgen M1(ψ), M2(ψ) dar, die aus der ersten Empfängerspur 1.1 und der zweiten Empfängerspur 1.2 gewonnen werden. Aus der Figur 6 ist ersichtlich, dass der Abstand der beiden Kurven mit zunehmendem Abstand ψ kleiner wird. Somit kann eine eindeutige Bestimmung des Abstands ψ in der zweiten Richtung Y basierend auf dem ersten Amplitudenbetrag M1 und dem zweiten Amplitudenbetrag M2 bestimmt werden. Beispielsweise kann der Quotient Q(ψ) = M1(ψ)/M2(ψ) gebildet werden, aus dessen Größe der Abstand ψ in der zweiten Richtung Y eindeutig bestimmbar ist.

Im vorgestellten Ausführungsbeispiel werden die Erregerleitungen 1.3, 1.4 von einem einzigen Erregerkontrollelement gespeist, so dass also in den Erregerleitungen 1.3, 1.4 derselbe Erregerstrom fließt. Durch die oben beschriebene Methode zur Bestimmung des Abstand ψ des Teilungselements 2 in der zweiten Richtung Y ist es möglich Fehler durch Schwankungen im Erregerstrom weitgehend zu eliminieren, so dass diese Schwankungen praktisch keinen Einfluss auf die Bestimmung des Abstand ψ haben.

**Patentansprüche**

**1.** Induktive Positionsmesseinrichtung, die ein Abtastelement (1) und ein Teilungselement (2) aufweist, wobei das Teilungselement (2) relativ zum Abtastelement (1) um eine Achse (A) drehbar angeordnet ist, und

    - das Abtastelement (1)

        ¬ zumindest eine Erregerleitung (1.3, 1.4) aufweist,
        ¬ eine erste Empfängerspur (1.1) aufweist, die zumindest eine Empfängerleitung (1.11, 1.12) umfasst, welche gemäß einem ersten periodischen Muster mit einer ersten Periode (P1.1) entlang einer ersten Richtung (X) verläuft, und
        ¬ eine zweite Empfängerspur (1.2) aufweist, die zumindest eine Empfängerleitung (1.21, 1.22) umfasst, wobei

    - das Teilungselement (2) eine Teilungsspur (2.1) umfasst, die sich bezogen auf die Achse (A) in Umfangsrichtung (U) erstreckt und entlang der Umfangsrichtung (U) eine Teilungsperiode (P2.1) aufweist, weiterhin

die Positionsmesseinrichtung so konfiguriert ist, dass ein durch die Teilungsspur (2.1) von der zumindest einen Erregerleitung (1.3, 1.4) erzeugtes elektromagnetisches Feld modulierbar ist, so dass durch die Empfängerleitung (1.11, 1.12)der ersten Empfängerspur (1.1) eine Winkelstellung (φ) des Teilungselements (2) relativ zum Abtastelement (1) detektierbar ist, und durch die Empfängerleitung (1.21, 1.22) der zweiten Empfängerspur (1.2) eine Position (ξ) des Teilungselements (2) in der ersten Richtung (X) relativ zum Abtastelement (1) detektierbar ist.

**2.** Induktive Positionsmesseinrichtung gemäß dem Anspruch 1, wobei die erste Empfängerspur (1.1) und / oder die zweite Empfängerspur (1.2) zumindest zwei Empfängerleitungen (1.11, 1.12; 1.21, 1.22) aufweist.

**3.** Induktive Positionsmesseinrichtung gemäß dem Anspruch 1 oder 2, wobei die erste Periode (P1.1) ungefähr der Teilungsperiode (P2.1) entspricht, so dass gilt:
1,5 > [erste Periode (P1.1) : Teilungsperiode (P2.1)] > 0,75.

**4.** Induktive Positionsmesseinrichtung gemäß einem der vorhergehenden Ansprüche, wobei die erste Empfängerspur (1.1) zumindest eine Empfängerleitung (1.11; 1.12) aufweist, die sich entlang der ersten Richtung (X) über eine Länge (L11) erstreckt, wobei die Länge (L11) mindestens drei-mal größer ist als die erste Periode (P1.1).

**5.** Induktive Positionsmesseinrichtung gemäß einem der vorhergehenden Ansprüche, wobei die Empfängerleitung (1.21, 1.22) der zweiten Empfängerspur (1.2) gemäß einem zweiten periodischen Muster mit einer zweiten Periode (P1.2) angeordnet ist, wobei die zweite Periode (P1.2) größer ist als die Teilungsperiode (P2.1) der Teilungsspur (2.1).

**6.** Induktive Positionsmesseinrichtung gemäß einem der vorhergehenden Ansprüche, wobei die Empfängerleitung (1.21, 1.22) der zweiten Empfängerspur (1.2) gemäß einem zweiten periodischen Muster mit einer zweiten Periode (P1.2) angeordnet ist und die zweite Periode (P1.2) größer ist als die erste Periode (P1.1).

**7.** Induktive Positionsmesseinrichtung gemäß einem der vorhergehenden Ansprüche, wobei bezogen auf die Achse (A) die erste Empfängerspur (1.1) mit radialem Versatz relativ zur zweiten Empfängerspur (1.2) angeordnet ist.

**8.** Induktive Positionsmesseinrichtung gemäß dem Anspruch 5, wobei die erste Empfängerspur (1.1) in kleinerem radialem Abstand zur Achse (A) angeordnet ist als die zweite Empfängerspur (1.2).

**9.** Induktive Positionsmesseinrichtung gemäß einem der vorhergehenden Ansprüche, wobei das Teilungselement (2) eine gekrümmte Mantelfläche aufweist, auf der die Teilungsspur (2.1) angeordnet ist.

**10.** Induktive Positionsmesseinrichtung gemäß einem der vorhergehenden Ansprüche, wobei die erste Empfängerspur (1.1) und / oder die zweite Empfängerspur (1.2) auf einer planen Ebene angeordnet ist.

**11.** Induktive Positionsmesseinrichtung gemäß dem Anspruch 9, wobei die erste Empfängerspur (1.1) und / oder die zweite Empfängerspur (1.2) auf einer gekrümmten Ebene angeordnet ist, wobei sich der Krümmungsradius der gekrümmten Ebene vom Krümmungsradius der gekrümmte Mantelfläche, auf der die Teilungsspur (2.1) angeordnet ist, unterscheidet.

**12.** Induktive Positionsmesseinrichtung gemäß einem der vorhergehenden Ansprüche, wobei die Teilungsspur (2.1) alternierend angeordnete Stege (2.11) und Lücken (2.12) aufweist.

**13.** Induktive Positionsmesseinrichtung gemäß einem der vorhergehenden Ansprüche, wobei

- das Teilungselement (2) eine kreisförmige Außenkontur mit einem Durchmesser (D) aufweist und
- die zweite Empfängerspur (1.2) zumindest eine Empfängerleitung (1.21; 1.22) aufweist, die sich entlang der ersten Richtung (X) über eine Länge (L12) erstreckt, wobei

die Länge (L12) größer ist als der halbe Durchmesser (D).

**14.** Induktive Positionsmesseinrichtung gemäß einem der vorhergehenden Ansprüche, wobei

- das Teilungselement (2) eine kreisförmige Außenkontur mit einem Durchmesser (D) aufweist und
- die erste Empfängerspur (1.1) zumindest eine Empfängerleitung (1.11; 1.12) aufweist, die sich entlang der ersten Richtung (X) über eine Länge (L11) erstreckt, wobei

die Länge (L11) größer ist als der Durchmesser (D).

**15.** Induktive Positionsmesseinrichtung gemäß einem der vorhergehenden Ansprüche, wobei

- das Teilungselement (2) eine kreisförmige Außenkontur mit einem Durchmesser (D) aufweist und
- die Empfängerleitung (1.21, 1.22) der zweiten Empfängerspur (1.2) gemäß einem zweiten periodischen Muster mit einer zweiten Periode (P1.2) angeordnet ist und die zweite Periode (P1.2) größer ist als der Durchmesser (D)

**16.** Induktive Positionsmesseinrichtung gemäß einem der vorhergehenden Ansprüche, wobei durch die Empfängerleitung (1.11, 1.12) der ersten Empfängerspur (1.1) ein erstes Signal mit einem ersten Amplitudenbetrag (M1) erzeugbar ist, und durch die Empfängerleitung (1.21, 1.22) der zweiten Empfängerspur (1.2) ein zweites Signal mit einem zweiten Amplitudenbetrag (M2) erzeugbar ist, und die Positionsmesseinrichtung so konfiguriert ist, dass basierend auf dem ersten Amplitudenbetrag (M1) und dem zweiten Amplitudenbetrag (M2) ein Abstand ($\psi$) in einer zweiten Richtung (Y) zwischen dem Abtastelement (1) und dem Teilungselement (2) bestimmbar ist.

**Claims**

**1.** Inductive position measurement device which has a scanning element (1) and a scale element (2), wherein the scale element (2) is arranged so as to be rotatable in relation to the scanning element (1) about an axis (A), and

- the scanning element (1)

¬ has at least one exciter line (1.3, 1.4),
¬ has a first receiver track (1.1) which comprises at least one receiver line (1.11, 1.12) which, according to a first period pattern with a first period (P1.1), runs along a first direction (X), and
¬ has a second receiver track (1.2) which comprises at least one receiver line (1.21, 1.22), wherein

- the scale element (2) comprises a scale track (2.1) which extends in the circumferential direction (U) with respect to the axis (A) and has a scale period (P2.1) along the circumferential direction (U), and also

the position measurement device is configured in such a way that an electromagnetic field which is generated by the scale track (2.1) of the at least one exciter line (1.3, 1.4) can be modulated so that an angular position (φ) of the scale element (2) relative to the scanning element (1) can be detected by the receiver line (1.11, 1.12) of the first receiver track (1.1), and
a position (ξ) of the scale element (2) can be detected in the first direction (X) relative to the scanning element (1) by the receiver line (1.21, 1.22) of the second receiver track (1.2).

2. Inductive position measurement device according to Claim 1, wherein the first receiver track (1.1) and/or the second receiver track (1.2) have/has at least two receiver lines (1.11, 1.12; 1.21, 1.22).

3. Inductive position measurement device according to Claim 1 or 2, wherein the first period (P1.1) corresponds approximately to the scale period (P2.1), so that the following applies: 1.5 > [first period (P1.1): scale period (P2.1)] > 0.75.

4. Inductive position measurement device according to one of the preceding claims, wherein the first receiver track (1.1) has at least one receiver line (1.11; 1.12) which extends along the first direction (X) over a length (L11), wherein the length (L11) is at least three times greater than the first period (P1.1).

5. Inductive position measurement device according to one of the preceding claims, wherein the receiver line (1.21, 1.22) of the second receiver track (1.2) is arranged according to a second periodic pattern with a second period (P1.2), wherein the second period (P1.2) is greater than the scale period (P2.1) of the scale track (2.1).

6. Inductive position measurement device according to one of the preceding claims, wherein the receiver line (1.21, 1.22) of the second receiver track (1.2) is arranged according to a second periodic pattern with a second period (P1.2), and the second period (P1.2) is greater than the first period (P1.1).

7. Inductive position measurement device according to one of the preceding claims, wherein with respect to the first axis (A) the first receiver track (1.1) is arranged with a radial offset relative to the second receiver track (1.2).

8. Inductive position measurement device according to Claim 5, wherein the first receiver track (1.1) is arranged at a smaller radial distance from the axis (A) than the second receiver track (1.2).

9. Inductive position measurement device according to one of the preceding claims, wherein the scale element (2) has a curved lateral surface on which the scale track (2.1) is arranged.

10. Inductive position measurement device according to one of the preceding claims, wherein the first receiver track (1.1) and/or the second receiver track (1.2) are arranged in a level plane.

11. Inductive position measurement device according to Claim 9, wherein the first receiver track (1.1) and/or the second receiver track (1.2) are arranged on a curved plane, wherein the curvature radius of the curved plane differs from the curvature radius of the curved lateral surface on which the scale track (2.1) is arranged.

12. Inductive position measurement device according to one of the preceding claims, wherein the scale track (2.1) has alternately arranged webs (2.11) and gaps (2.12).

13. Inductive position measurement device according to one of the preceding claims, wherein

- the scale element (2) has a circular external contour with a diameter (D), and
- the second receiver track (1.2) has at least one receiver line (1.21; 1.22) which extends along the first direction (X) over a length (L12), wherein

the length (L12) is greater than half the diameter (D).

14. Inductive position measurement device according to one of the preceding claims, wherein

- the scale element (2) has a circular external contour with a diameter (D), and
- the first receiver track (1.1) has at least one receiver line (1.11; 1.12) which extends along the first direction (X) over a length (L11), wherein

the length (L11) is greater than the diameter (D).

15. Inductive position measurement device according to one of the preceding claims, wherein

- the scale element (2) has a circular external contour with a diameter (D), and
- the receiver line (1.21, 1.22) of the second receiver track (1.2) is arranged according to a second periodic pattern with a second period (P1.2), and the second period (P1.2) is greater than the diameter (D).

16. Inductive position measurement device according to one of the preceding claims, wherein a first signal with a first amplitude value (M1) can be generated by the receiver line (1.11, 1.12) of the first receiver track (1.1), and a second signal with a second amplitude value (M2) can be generated by the receiver line (1.21, 1.22) of the second receiver track (1.2), and the position measurement device is configured in such a way that a distance ($\psi$) in a second direction (Y) between the scanning element (1) and the scale element (2) can be determined on the basis of the first amplitude value (M1) and the second amplitude value (M2).

**Revendications**

1. Dispositif de mesure de position inductif, lequel possède un élément de balayage (1) et un élément à graduation (2), l'élément à graduation (2) étant disposé rotatif autour d'un axe (A) par rapport à l'élément de balayage (1) et

- l'élément de balayage (1)

- possédant au moins une ligne d'excitation (1.3, 1.4),
- possédant une première piste de réception (1.1) qui comporte au moins une ligne de réception (1.11, 1.12), laquelle suit un tracé le long d'une première direction (X) conformément à un premier modèle périodique avec une première période (P1.1) et
- possédant une deuxième piste de réception (1.2) qui comporte au moins une ligne de réception (1.21, 1.22),

- l'élément à graduation (2) comportant une piste à graduation (2.1) qui s'étend dans la direction périphérique (U) en référence à l'axe (A) et possédant une période de graduation (P2.1) le long de la direction périphérique (U),

le dispositif de mesure de position étant en outre configuré de telle sorte qu'un champ électromagnétique généré par l'au moins une ligne d'excitation (1.3, 1.4) par le biais de la piste à graduation (2.1) est modulable, de sorte qu'une position angulaire ($\varphi$) de l'élément à graduation (2) par rapport à l'élément de balayage (1) peut être détectée par le biais de la ligne de réception (1.11, 1.12) de la première piste de réception (1.1), et une position ($\xi$) de l'élément à graduation (2) dans la première direction (X) par rapport à l'élément de balayage (1) peut être détectée par le biais de la ligne de réception (1.21, 1.22) de la deuxième piste de réception (1.2).

2. Dispositif de mesure de position inductif selon la revendication 1, la première piste de réception (1.1) et/ou la deuxième piste de réception (1.2) possédant au moins deux lignes de réception (1.11, 1.12 ; 1.21, 1.22).

3. Dispositif de mesure de position inductif selon la revendication 1 ou 2, la première période (P1.1) correspondant approximativement à la période de graduation (P2.1), de sorte que la relation suivante est vérifiée :
1,5 > [première période (P1.1) : période de graduation (P2.1)] > 0,75.

4. Dispositif de mesure de position inductif selon l'une des revendications précédentes, la première piste de réception (1.1) possédant au moins une ligne de réception (1.11, 1.12) qui s'étend sur une longueur (L11) le long de la première direction (X), la longueur (L11) étant au moins trois fois supérieure à la première période (P1.1).

5. Dispositif de mesure de position inductif selon l'une des revendications précédentes, la ligne de réception (1.21, 1.22) de la deuxième piste de réception (1.2) étant disposée conformément à un deuxième modèle périodique avec une deuxième période (P1.2), la deuxième période (P1.2) étant supérieure à la période de graduation (P2.1) de la piste à graduation (2.1).

6. Dispositif de mesure de position inductif selon l'une des revendications précédentes, la ligne de réception (1.21, 1.22) de la deuxième piste de réception (1.2) étant disposée conformément à un deuxième modèle périodique avec une deuxième période (P1.2), la deuxième période (P1.2) étant supérieure à la première période (P1.1).

7. Dispositif de mesuré de position inductif selon l'une des revendications précédentes, la première piste de réception (1.1) étant disposée avec un décalage radial par rapport à la deuxième piste de réception (1.2) en référence à l'axe (A).

8. Dispositif de mesure de position inductif selon la revendication 5, la première piste de réception (1.1) étant disposée à un écart radial de l'axe (A) plus petit que la deuxième piste de réception (1.2).

9. Dispositif de mesure de position inductif selon l'une des revendications précédentes, l'élément à graduation (2) possédant une enveloppe courbée sur laquelle est disposée la piste à graduation (2.1).

10. Dispositif de mesure de position inductif selon l'une des revendications précédentes, la première piste de réception (1.1) et/ou la deuxième piste de réception (1.2) étant disposées sur un plan plat.

11. Dispositif de mesure de position inductif selon la revendication 9, la première piste de réception (1.1) et/ou la deuxième piste de réception (1.2) étant disposées sur un plan courbé, le rayon de courbure du plan courbé étant différent du rayon de courbure de l'enveloppe courbée sur laquelle est disposée la piste à graduation (2.1).

12. Dispositif de mesure de position inductif selon l'une des revendications précédentes, la piste à graduation (2.1) possédant des arêtes (2.11) et des creux (2.12) disposés en alternance.

13. Dispositif de mesure de position inductif selon l'une des revendications précédentes,

   - l'élément à graduation (2) possédant un contour extérieur de forme circulaire ayant un diamètre (D) et
   - la deuxième piste de réception (1.2) possédant au moins une ligne de réception (1.21, 1.22) qui s'étend sur une longueur (L12) le long de la première direction (X), la longueur (L12) étant supérieure à la moitié du diamètre (D).

14. Dispositif de mesure de position inductif selon l'une des revendications précédentes,

   - l'élément à graduation (2) possédant un contour extérieur de forme circulaire ayant un diamètre (D) et
   - la première piste de réception (1.1) possédant au moins une ligne de réception (1.11, 1.12) qui s'étend sur une longueur (L11) le long de la première direction (X), la longueur (L11) étant supérieure au diamètre (D).

15. Dispositif de mesure de position inductif selon l'une des revendications précédentes,

   - l'élément à graduation (2) possédant un contour extérieur de forme circulaire ayant un diamètre (D) et
   - la ligne de réception (1.21, 1.22) de la deuxième piste de réception (1.2) étant disposée conformément à un deuxième modèle périodique avec une deuxième période (P1.2) et la deuxième période (P1.2) étant supérieure au diamètre (D).

16. Dispositif de mesure de position inductif selon l'une des revendications précédentes,
   un premier signal ayant une première valeur absolue d'amplitude (M1) pouvant être généré par le biais de la ligne de réception (1.11, 1.12) de la première piste de réception (1.1) et
   un deuxième signal ayant une deuxième valeur absolue d'amplitude (M2) pouvant être généré par le biais de la ligne de réception (1.21, 1.22) de la deuxième piste de réception (1.2), et le dispositif de mesure de position étant configuré de telle sorte qu'un écart ($\psi$) dans une deuxième direction (Y) entre l'élément de balayage (1) et l'élément à graduation (2) peut être déterminé en se basant sur la première valeur absolue d'amplitude (M1) et la deuxième valeur absolue d'amplitude (M2).

Fig. 1

Fig. 2

Fig. 3

Fig. 4

Fig. 5

Fig. 6

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012223037 A1